# EUROPEAN PATENT APPLICATION

(11) **EP 1 514 914 A1**
(43) Date of publication of application: **16.03.2005**
(21) Application number: 04254983.2
(22) Date of filing: 19.08.2004
(51) Int. Cl.: C09J 7/00, B32B 7/08

(54) **Composition of coextruded adhesive films to bond non-polar to polar surfaces**

(30) Priority: 11.09.2003 US 660170
(71) Applicant: WORTHEN INDUSTRIES INC., Nashua, NH 03060 (US)
(72) Inventor: Sasongko, Sun, Medford, MA 02155 (US); Strickland, Barbara, Hudson, NH 03051 (US)
(74) Representative: Bankes, Stephen Charles Digby

(57) **Abstract**

A two-layered adhesive film for bonding non-polar material such as Styrene-butadiene-rubber (SBR), natural rubber or ethylene copolymers to polar materials such as PVC, polyurethane, polyamide or polyester. The film comprises a thermoplastic polyurethane based adhesive layer (12) adapted to bond to the polar material; and an ethylene copolymer based adhesive layer (14) adapted to bond to the non-polar material. The two adhesive layers are interfacially bonded by coextrusion.

## Description

The invention relates to the composition of a coextruded adhesive film used to bond non-polar to polar materials, and has particular utility in bonding polymeric materials.

The process of bonding a non-polar surface such as Styrene-butadiene-rubber (SBR) or Ethylene Vinyl Acetate (EVA) to a polar surface such as PVC, polyurethane or polyester almost always involves the use of surface modification such as the use of a primer for one or both surfaces or corona treatment of the non-polar surface prior to applying an adhesive such as a urethane-based adhesive. Whether the urethane is applied as a liquid or a film, the primers used are either solvent or water based that either emit hazardous materials into the atmosphere or require energy to dry. The treatments are fugitive, they have limited shelf life and are easily rendered useless by surface contamination.

Broadly, the invention comprises a thermoplastic urethane (TPU) adhesive film having a functionalized ethylene copolymer adhesive film bonded thereto. The two adhesive films are preferably coextruded to form a coextrudate. The coextrudate can bond a non-polar material such as Styrene-butadiene-rubber (SBR) or Ethylene Vinyl Acetate (EVA) to a polar surface such a PVC, polyurethane or polyester. The ethylene copolymer can bond to the non-polar material while the thermoplastic polyurethane can bond to the polar material.

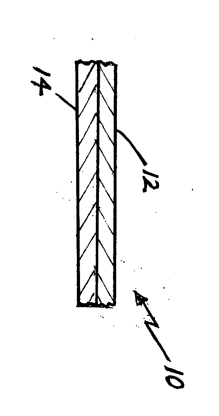

The accompanying drawing illustrates a coextrudate according to the invention.

In the present invention, one layer of the adhesive is preferably an ethylene copolymer-based adhesive and the other layer a thermoplastic polyurethane-based adhesive. The ethylene copolymer-based adhesive layer can bond to a non-polar material such as Styrene-butadiene-rubber (SBR) or Ethylene Vinyl Acetate (EVA). The thermoplastic polyurethane-based adhesive layer can bond to a polar material such as PVC, polyurethane or polyester. The adhesive layers may be applied singly or as a coextrusion by nip roller, lamination, spraying as film, etc.

### Example:

A thermoplastic polyurethane adhesive, e.g.: Irogran® CA116 from Huntsman West Deptford, NJ is coextruded in a thickness of 12.7 to 127 µm (0.0005" to 0.005") with an anhydride modified ethylene vinyl acetate, e.g.: Bynel® Series 3800 from DuPont, Wilmington, DE, and specifically Bynel® E418, or Fusabond® C Series, specifically MC 190D, Dupont, Wilmington, DE in a thickness of 12.7µm to 1.27mm (0.0005" to 0.05") and coextruded to form a two-layer film.

Either of these coextruded films can be used to bond a non-polar untreated EVA surface to a polar surface such as PVC and give adhesion strength in excess of 3.5N/mm (20 pounds per linear inch). Without the abovementioned films, in order to achieve similar level of adhesion, the Phylon surface must be treated with a primer prior to bonding with a urethane adhesive to the PVC.

As shown in the drawing, the coextrudate 10 comprises a thermoplastic polyurethane layer 12 and an anhydride modified ethylene vinyl acetate layer 14.

Adhesives include the following extrudate combinations: acid modified ethylene vinyl acetate/ester-based thermoplastic polyurethane; acid modified acrylic acetate/ester-based thermoplastic polyurethane or acrylic modified polyurethane; acrylic or acid modified ethylene copolymer ester-based polyurethane or polyester; acrylic or acid modified polyolefins/ester-based polyurethane or acrylate-modified polyurethane or polyester. Some examples include PVC, Polyvinylidene chloride, Polyvinylidene fluoride, Tedlar® (Polyvinylfluoride) from Dupont, Wilmington, DE, Pebax® (Polyether amide) from Ato-Fina, Puteaux, France, epoxy, polyurethane, polyamide or polyester. Specifically, the following non polar material/adhesive layer 14/adhesive layer 12/polar material combinations are believed to be suitable for purposes of the invention.

| Non-polar Material | Adhesive Layer 14 | Adhesive Layer 12 | Polar Material |
|---|---|---|---|
| EVA | acid or anhydride modified polyolefins | ester-based TPU | Polyurethane |
| | | | |
| EVA | acid modified acrylic | ester-based TPU | Polyurethane |
| | | | |
| EPDM | acid or anhydride modified polyolefins | ester-based TPU | PVC |
| | | | |
| SBR | modified EVA | Urethane | Polyurethane, acrylates or polyesters |
| | | | |
| Natural Rubber | modified EVA | ester-based TPU | Polyurethane |

Although described reference to specific thermoplastic polyurethane adhesives and ethylene copolymer based adhesives, other suitable adhesives include thermoplastic polyurethane blends and polyesters and polyamides.

## Claims

1. A two-layered adhesive film for bonding non-polar material to polar materials, which comprises:
a thermoplastic polyurethane based adhesive layer (12) adapted to bond to the said polar material; and
an ethylene copolymer based adhesive layer (14) adapted to bond to the said non-polar material;
the two adhesive layers being interfacially bonded by coextrusion.

2. The adhesive film of claim 1 wherein one adhesive layer is selected from acid or acrylic or anhydride modified ethylene copolymers.

3. The adhesive film of claim 2 wherein the other adhesive is selected from thermoplastic polyurethanes, acrylic modified polyurethanes, acrylate modified polyurethane and polyesters.

4. The adhesive film of any preceding claim wherein the polar material is selected from PVC, Polyvinylidene chloride, Polyvinylidene fluoride, Polyvinylfluoride, Polyether amide, epoxy, polyurethane, polyamide or polyester.

5. The adhesive film of claim 4 wherein the polar material is selected from PVC, polyurethane, polyamide or polyester.

6. The adhesive film of any preceding claim wherein the non polar material is selected from the group consisting of ethylene copolymers, natural rubber and styrene-butadiene rubber (SBR) .

7. The adhesive film of any preceding claim wherein each layer of adhesive has a thickness in the range of 12.7µm to 1.27mm (0.0005" to 0.05").
